# EUROPEAN PATENT APPLICATION

(11) **EP 3 372 565 A1**
(43) Date of publication of application: **12.09.2018**
(21) Application number: 17859343.0
(22) Date of filing: 20.11.2017
(51) Int. Cl.: C03B 25/00

(54) **LARGE-SIZE OPTICAL FIBER PERFORM DEHYDROXYLATION ANNEALING METHOD AND DEVICE**

(30) Priority: 05.01.2017 CN 201710008217
(71) Applicant: Futong Group (Jiashan) Communication Technology Co., Ltd., Jianxing Zhejiang 314102 (CN)
(72) Inventor: DING, Xiong, Jiaxing Zhejiang 314102 (CN); LIU, Lianyong, Jiaxing Zhejiang 314102 (CN); WU, Haigang, Jiaxing Zhejiang 314102 (CN)
(74) Representative: Loo, Chi Ching
(86) International application number: PCT/CN2017/111976
(87) International publication number: WO 2018/126805

(57) **Abstract**

This invention provides a dehydroxylation annealing method for a large-sized optical fiber preform and a device, wherein the method includes: i) placing the optical fiber preforms in a furnace anneal; ii) heating the optical fiber preforms to a stress removal temperature by raising a temperature four times; iii) preserving the temperature; and iv) reducing the temperature of the optical fiber preforms to a cooling temperature by reducing the temperature four times. This invention heats the preforms to the stress removal temperature by gradually raising the temperature four times which can guarantee a thermal stability of the preforms; heat of the interior of the preforms can be evenly radiated through gradually reducing the temperature four times; and both heating and cooling are performed in a vacuum environment, compared to a non-vacuum environment, the vacuum state is more conducive to a detachment of residual He and hydroxyl in the optical fiber preform, and an effect is better.

## Description

### BACKGROUND OF THE INVENTION

### Field of the Invention

This invention relates to a field of optical fiber manufacturing, and more particularly, to a dehydroxylation annealing method for a large-sized optical fiber preform and a device.

### Description of the Related Art

The large-sized optical fiber preform refers to an optical fiber preform with a diameter of 120 mm or more and a length of 1500 mm or more. Manufactured by an outside vapor deposition method (OVD), except an interior stress, there will be a certain amount of hydroxyl (OH) for the large-sized optical fiber preform, which will cause an attenuation exceeding the standard, a fiber breakage, an F change and so on for the optical fiber preform in a drawing process. Aiming at the above-mentioned situations, the prior art suspends a single large-sized optical fiber preform at a quartz tube, directly heats the large-sized optical fiber preform to a certain temperature through a heating element wrapping the quartz tube, preserves the temperature by presetting a time of heat preservation, and then directly reduces the temperature for cooling, such that the heat stress in the large-sized optical fiber preform is eliminated while excess hydroxyls are removed at the same time. However, during a cooling process, new heat stresses are generated. The main reason for generating heat stress is due to the relatively large size of the large-sized optical fiber preform, resulting in temperature gradients in inner and outer layers or in different positions. During the cooling process, due to differences of the shape, the thickness, the degree of cooling and so on of the optical fiber preform, temperature gradients will be formed at various positions, such that irregular heat stresses are generated in a product.

In summary, how to effectively solve the problem of generating new heat stresses after the optical fiber preform is reheated to remove the heat stress, and at the same time keeping a hydroxyl content within a reasonable range, are issues which are urgently needed to be solved by those skilled in the art.

### BRIEF SUMMARY OF THE INVENTION

In order to solve problems existing in the prior art, the present invention provides a dehydroxylation annealing method for a large-sized optical fiber preform, which can effectively solve the problem of generating new heat stresses after the optical fiber preform is reheated to remove the heat stress, and at the same time keeping a hydroxyl content within a reasonable range. The present invention further provides a corresponding dehydroxylation annealing device to implement the method of this invention.

A dehydroxylation annealing method for a large-sized optical fiber preform includes the following steps:
i) placing a plurality of optical fiber preforms in a furnace anneal, and leaving an interval between each optical fiber preform;
ii) heating the optical fiber preforms to a stress removal temperature, and a process of heating to the stress removal temperature including four stages of raising a temperature uniformly which meets: speed of raising the temperature in a first stage ≥ speed of raising the temperature in a second stage ≥ speed of raising the temperature in a third stage ≥ speed of raising the temperature in a fourth stage;
iii) preserving the temperature of the optical fiber preforms for a preset time of heat preservation; and
iv) reducing the temperature of the optical fiber preforms to a preset cooling temperature, and reducing the temperature to the preset cooling temperature including four stages of reducing the temperature uniformly which meets: speed of reducing the temperature in a fourth stage ≥ speed of reducing the temperature in a third stage ≥ speed of reducing the temperature in a second stage ≥ speed of reducing the temperature in a first stage.

Before the Step ii), a vacuuming operation to the furnace anneal is also included, and a vacuum state of the furnace anneal is kept until the end of the Step iv).

In this application, "keeping the vacuum state of the furnace anneal" means a continuous vacuum operation; and the air in the furnace anneal can be exhausted through the vacuum operation.

The dehydroxylation annealing method heats the preforms to the stress removal temperature by gradually raising the temperature four times, speed of raising the temperature of these four stages are different and gradually decrease according to characteristics of the preforms, and this heating mode can guarantee a thermal stability of the preforms; the purpose of heat preservation is to make an interior of the preform fully heated to ensure a reliability of the stress removal; and through a way of gradually reducing the temperature four times, and speed of reducing the temperature in the previous stage being lower than speed of reducing the temperature in the later stage, this cooling way can effectively ensure that heat of the interior of the preforms can be evenly radiated, thereby effectively avoiding production of new heat stresses in a stress removal process of the optical fiber preforms. Both heating and cooling are performed in a vacuum environment. Compared to a non-vacuum environment, the vacuum state is more conducive to a detachment of residual He and hydroxyl in the optical fiber preform, and an effect is better.

In this application, the vacuuming operation is performed before the beginning of heating in the Step ii). Because if it is according to procedures of heating first and then vacuuming, when heated air is pumped out by the vacuum pump, the heat will inevitably be brought to the vacuum pump, resulting in a too high temperature raising in the vacuum pump, which may cause a decrease of an efficiency of the vacuum pump. The heated air is directed to a vacuum pressure gauge, which generates a temperature raising to the vacuum pressure gauge. If the temperature raising exceeds an operating temperature range for the vacuum pressure gauge, it may cause the vacuum pressure gauge to produce an indication error.

For a vacuum isolation convection conduction, the heat is conducted by radiation. That is, only the quartz glass is used as a medium to conduct the heat. Compared with the non-vacuum environment, the temperature raising is relatively slow. In the present application, the dehydroxylation annealing operation is performed through four stages of heating and four stages of cooling, which can be combined with a vacuum environment to ensure the effect of the dehydroxylation annealing.

Optionally, in the Step ii), the speed of raising the temperature in the first stage may be 10∼15 °C/min, the speed of raising the temperature in the second stage may be 5∼10 °C/min, the speed of raising the temperature in the third stage may be 3∼5 °C/min, and the speed of raising the temperature in the third stage may be 1∼3 °C/min; wherein the first stage may be to raise the temperature to 450∼550 °C, the second stage may be to raise the temperature to 750∼850 °C, the third stage may be to raise the temperature to 950∼1050 °C, and the fourth stage may be to raise the temperature to 1070∼1130 °C.

Optionally, in the Step iii), the preset time of heat preservation may be 450∼500 min.

Optionally, in the Step iv), the speed of reducing the temperature in the first stage may be 1∼3 °C/min, the speed of reducing the temperature in the second stage may be 5∼10 °C/min, the speed of reducing the temperature in the third stage may be 10∼15 °C/min, and the speed of reducing the temperature in the fourth stage may be 15∼20 °C/min; and the first stage may be to reduce the temperature to 1000∼1050 °C, the second stage may be to reduce the temperature to 700∼750 °C, the third stage may be to reduce the temperature to 400∼450 °C, and the fourth stage may be to reduce the temperature to 60∼100 °C.

Optionally, in the Step i), both ends of a plurality of optical fiber preforms may be placed in the furnace anneal through a quartz holder, and the quartz holder may divide the optical fiber preforms in the furnace anneal into a horizontally arranged multilayer superposition structure.

In the prior art, the optical fiber preforms are directly placed on a high temperature resistant aluminum silicate fiber blanket laid on the bottom of the furnace anneal. Only four optical fiber preforms can be laid on the furnace anneal one time at most, and the number of the optical fiber preforms can be greatly increased by placing the optical fiber preform through the quartz holder. The space of the furnace anneal can be reasonably utilized, and an efficiency and a yield of annealing of the optical fiber preforms can be improved. Compared with the use of a graphite holder, the use of a quartz material avoids the problem of a high fiber breaking rate in a subsequent drawing of impurities on the surface of the preform caused by high volatility of the graphite, and a focusing property of the quartz glass can make the preserved heat more concentrated and utilize the internal space of the furnace rationally, which improves the heat preservation efficiency.

Optionally, before the Step ii), the furnace anneal may be vacuumed 20 to 40 min in advance.

This application further provides a dehydroxylation annealing device for achieving the above-mentioned method for the large-sized optical fiber preform, including:
a furnace anneal, a heating element and a thermocouple for detecting a temperature of the optical fiber preforms being installed in the furnace anneal;
two groups of quartz holders, being respectively placed at two ends of a plurality of optical fiber preforms in the furnace anneal, such that the optical fiber preforms are divided into a horizontally arranged multilayer superposition structure, and an interval is left between each optical fiber preform; and
a vacuuming mechanism, for vacuuming the furnace anneal.

Optionally, each group of quartz holders may include:
a quartz base, the top of the quartz base having a plurality of semicircular arc grooves arranged apart;
a plurality of quartz frames, upper and lower sides of the quartz frames being provided with a plurality of semicircular arc grooves arranged apart, and two semicircular arc grooves matching with each other forming a cylindrical limit hole matching with an outer wall of the optical fiber preform; and
the quartz base and one of the quartz frames matching with each other in an embedding way, and two adjacent quartz frames matching with each other in the embedding way.

The quartz base is disposed at the bottom, and a plurality of quartz frames are sequentially superimposed on the quartz base. The quartz base and the quartz frame can form a plurality of limiting holes at a matching side, and a matching side of two quartz frames matching with each other can also form a plurality of limiting holes. Each limiting hole can limit one preform. The structure of the quartz holder enables the optical fiber preforms to be divided into horizontally arranged multiple layers and each optical fiber preform has an interval therebetween.

In this application, a top surface of the quartz base has a plurality of positioning slots. A top portion of the quartz frame is provided with a plurality of positioning slots, a bottom portion of the quartz frame is provided with a plurality of positioning blocks. The positioning slots and the positioning blocks match with each other in the embedding way. This kind of structure can ensure the stability of the quartz holder, and the preforms can be reliably limited even if they are superimposed to multiple layers.

Optionally, the vacuuming mechanism may include:
a vacuum pump, disposed outside the furnace anneal;
a vacuuming pipe, one end communicating with an internal cavity of the furnace anneal, and the other end being connected with a vacuuming port of the vacuum pump;
a pipe insulation shell, sleeved at an outer wall of the vacuuming pipe; and
a cooling fan, installed at the pipe insulation shell.

The vacuuming operation can be achieved through the vacuuming pipe and the vacuum pump; and the vacuuming pipe has been kept in a high temperature state during the operation, and the vacuuming pipe can be protected by disposing the pipe insulation shell to prevent the vacuuming pipe from breaking by external objects, and it can also prevent an operator from being scalded by inadvertently touching.

Optionally, the vacuuming mechanism may further include filters detachablely installed at both sides of the vacuuming pipe.

The furnace anneal generally uses lightweight firebricks and thermal insulation fibers as insulation materials of the interior. During the vacuuming process, a certain amount of asbestos dust will be generated. Using the filter can avoid air extraction which causes air pollution and damage to the vacuum pump, and a detachable installation way is convenient for clearance and maintenance.

Optionally, a side wall of the furnace anneal may be provided with an insulation fibre layer, and a side wall of the pipe insulation shell may be provided with the insulation fibre layer.

In this application, min represents minutes, and °C/min represents centigrade per minute.

Advantages of this invention are: the dehydroxylation annealing method heats the preforms to the stress removal temperature by gradually raising the temperature four times, speed of raising the temperature of these four stages are different and gradually decrease according to characteristics of the preforms, and this heating mode can guarantee a thermal stability of the preforms; the purpose of heat preservation is to make an interior of the preform fully heated to ensure a reliability of the stress removal; and through a way of gradually reducing the temperature four times, and speed of reducing the temperature in the previous stage being lower than speed of reducing the temperature in the later stage, this cooling way can effectively ensure that heat of the interior of the preforms can be evenly radiated, thereby effectively avoiding production of new heat stresses in a stress removal process of the optical fiber preforms. Both heating and cooling are performed in a vacuum environment. Compared to a non-vacuum environment, the vacuum state is more conducive to a detachment of residual He and hydroxyl in the optical fiber preform, and an effect is better.

### BRIEF DESCRIPTION OF THE DRAWINGS

FIG. 1 is a dehydroxylation annealing of a large-sized optical fiber preform;
FIG. 2 is a structural schematic diagram of a quartz holder; and
FIG. 3 is a schematic diagram of matching between two groups of the quartz holders and the preforms.

### Figure reference numerals:

1 furnace anneal; 2 quartz holder; 3 optical fiber preform; 4 thermocouple; 5 filter; 6 pipe insulation shell; 7 cooling fan; 8 vacuuming pipe; 9 vacuum pump; 10 quartz base; 11 semicircular arc groove; 12 positioning slot; 13 positioning block; 14 quartz top frame; and 15 quartz holder.

### DETAILED DESCRIPTION OF THE INVENTION

In order to make the present invention clearer, the present invention will be explained in detail with reference to accompanying drawings and embodiments.

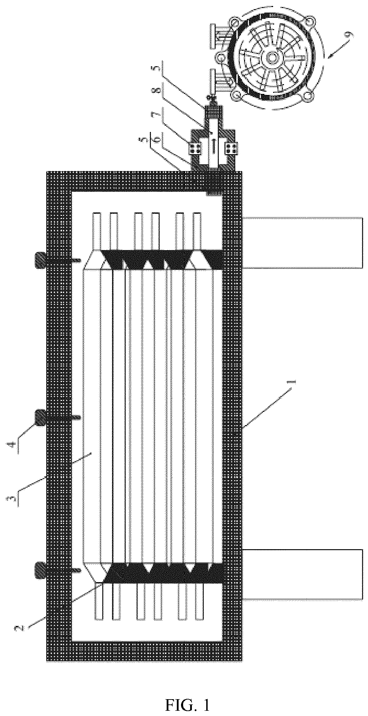

A dehydroxylation annealing method for a large-sized optical fiber preform, referring to FIG. 1, includes the following steps:
i) placing a plurality of optical fiber preforms 3 in a furnace anneal 1, and leaving an interval between each optical fiber preform 3;
ii) heating the optical fiber preforms 3 to a stress removal temperature, and a process of heating to the stress removal temperature including four stages of raising a temperature uniformly which meets: speed of raising the temperature in a first stage ≥ speed of raising the temperature in a second stage ≥ speed of raising the temperature in a third stage ≥ speed of raising the temperature in a fourth stage;
iii) preserving the temperature of the optical fiber preforms 3 for a preset time of heat preservation; and
iv) reducing the temperature of the optical fiber preforms 3 to a preset cooling temperature, and reducing the temperature to the preset cooling temperature including four stages of reducing the temperature uniformly which meets: speed of reducing the temperature in a fourth stage ≥ speed of reducing the temperature in a third stage ≥ speed of reducing the temperature in a second stage ≥ speed of reducing the temperature in a first stage.

Before the Step ii), a vacuuming operation to the furnace anneal is also included, and a vacuum state of the furnace anneal is kept until the end of the Step iv).

The dehydroxylation annealing method heats the preforms 3 to the stress removal temperature by gradually raising the temperature four times, speed of raising the temperature of these four stages are different and gradually decrease according to characteristics of the preforms 3, and this heating mode can guarantee a thermal stability of the preforms 3; the purpose of heat preservation is to make an interior of the preform 3 fully heated to ensure a reliability of the stress removal; and through a way of gradually reducing the temperature four times, and speed of reducing the temperature in the previous stage being lower than speed of reducing the temperature in the later stage, this cooling way can effectively ensure that heat of the interior of the preforms 3 can be evenly radiated, thereby effectively avoiding production of new heat stresses in a stress removal process of the optical fiber preforms 3. Both heating and cooling are performed in a vacuum environment. Compared to a non-vacuum environment, the vacuum state is more conducive to a detachment of residual He and hydroxyl in the optical fiber preform, and an effect is better.

In this application, the vacuuming operation is performed before the beginning of heating in the Step ii). Because if it is according to procedures of heating first and then vacuuming, when heated air is pumped out by the vacuum pump, the heat will inevitably be brought to the vacuum pump, resulting in a too high temperature raising in the vacuum pump, which may cause a decrease of an efficiency of the vacuum pump. The heated air is directed to a vacuum pressure gauge, which generates a temperature raising to the vacuum pressure gauge. If the temperature raising exceeds an operating temperature range for the vacuum pressure gauge, it may cause the vacuum pressure gauge to produce an indication error.

For a vacuum isolation convection conduction, the heat is conducted by radiation.

That is, only the quartz glass is used as a medium to conduct the heat. Compared with the non-vacuum environment, the temperature raising is relatively slow. In the present application, the dehydroxylation annealing operation is performed through four stages of heating and four stages of cooling, which can be combined with a vacuum environment to ensure the effect of the dehydroxylation annealing.

In this embodiment, in the Step ii), the speed of raising the temperature in the first stage is 10∼15 °C/min, the speed of raising the temperature in the second stage is 5∼10 °C/min, the speed of raising the temperature in the third stage is 3∼5 °C/min, and the speed of raising the temperature in the fourth stage is 1∼3 °C/min; wherein the first stage is to raise the temperature to 450∼550 °C, the second stage is to raise the temperature to 750∼850 °C, the third stage is to raise the temperature to 950∼1050 °C, and the fourth stage is to raise the temperature to 1070∼1130 °C.

In this embodiment, in the Step iii), the preset time of heat preservation is 450∼500 min.

In this embodiment, in the Step iv), the speed of reducing the temperature in the first stage is 1∼3 °C/min, the speed of reducing the temperature in the second stage is 5∼10 °C/min, the speed of reducing the temperature in the third stage is 10∼15 °C/min, and the speed of reducing the temperature in the fourth stage is 15∼20 °C/min; and the first stage is to reduce the temperature to 1000∼1050 °C, the second stage is to reduce the temperature to 700∼750 °C, the third stage is to reduce the temperature to 400∼450 °C, and the fourth stage is to reduce the temperature to 60∼100 °C.

In this embodiment, in the Step i), both ends of a plurality of optical fiber preforms 3 are placed in the furnace anneal 1 through a quartz holder 2, and the quartz holder 2 divides the optical fiber preforms 3 in the furnace anneal 1 into a horizontally arranged multilayer superposition structure.

In the prior art, the optical fiber preforms 3 are directly placed on a high temperature resistant aluminum silicate fiber blanket laid on the bottom of the furnace anneal 1. Only four optical fiber preforms 3 can be laid on the furnace anneal 1 one time at most, and the number of the optical fiber preforms 3 can be greatly increased by placing the optical fiber preform 3 through the quartz holder 2. The space of the furnace anneal 1 can be reasonably utilized, and an efficiency and a yield of annealing of the optical fiber preforms 3 can be improved. Compared with the use of a graphite holder, the use of a quartz material avoids the problem of a high fiber breaking rate in a subsequent drawing of impurities on the surface of the preform 3 caused by high volatility of the graphite, and a focusing property of the quartz glass can make the preserved heat more concentrated and utilize the internal space of the furnace rationally, which improves the heat preservation efficiency.

In this embodiment, before the Step ii), a vacuuming operation to the furnace anneal 1 is also included, and a vacuum state of the furnace anneal 1 is kept until the end of the Step iv).

In this application, before the Step ii), the furnace anneal 1 is vacuumed 20 to 40 min in advance.

In this application, "keeping the vacuum state of the furnace anneal" means a continuous vacuum operation; and the air in the furnace anneal 1 can be exhausted through the vacuum operation.

As shown in FIG. 1, FIG. 2 and FIG. 3, this embodiment further provides a dehydroxylation annealing device for achieving the above-mentioned method for the large-sized optical fiber preform 3, including:
a furnace anneal 1, a heating element and a thermocouple 4 for detecting a temperature of the optical fiber preforms 3 being installed in the furnace anneal;
two groups of quartz holders 2, being respectively placed at two ends of a plurality of optical fiber preforms 3 in the furnace anneal 1, such that the optical fiber preforms 3 are divided into a horizontally arranged multilayer superposition structure, and an interval is left between each optical fiber preform 3; and
a vacuuming mechanism, for vacuuming the furnace anneal 1.

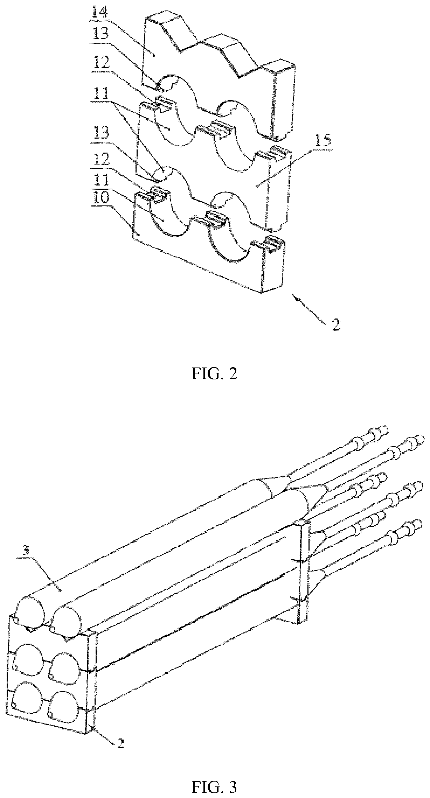

As shown in FIG. 2 and FIG. 3, in this embodiment, each group of quartz holders 2 includes:
a quartz base 10, the top of the quartz base 10 having a plurality of semicircular arc grooves 11 arranged apart;
a plurality of quartz frames 15, upper and lower sides of the quartz frames 15 being provided with a plurality of semicircular arc grooves 11 arranged apart, and two semicircular arc grooves 11 matching with each other forming a cylindrical limit hole matching with an outer wall of the optical fiber preform 3; and
the quartz base 10 and one of the quartz frames 15 matching with each other in an embedding way, and two adjacent quartz frames 15 matching with each other in the embedding way.

The quartz base 10 is disposed at the bottom, and a plurality of quartz frames 15 are sequentially superimposed on the quartz base 10. The quartz base 10 and the quartz frame 15 can form a plurality of limiting holes at a matching side, and a matching side of two quartz frames 15 matching with each other can also form a plurality of limiting holes. Each limiting hole can limit one preform 3. The structure of the quartz holder 2 enables the optical fiber preforms 3 to be divided into horizontally arranged multiple layers and each optical fiber preform 3 has an interval therebetween.

In this application, a top surface of the quartz base 10 has a plurality of positioning slots 12, the top of the quartz frame 15 is provided with positioning slots 12, and the bottom of the quartz frame 15 is provided with positioning blocks 13. The positioning slots 12 and the positioning blocks 13 match with each other in the embedding way. This kind of structure can ensure a stability of the quartz holder 2, and the preforms 3 can be reliably limited even if they are superimposed to multiple layers.

In this embodiment, each group of quartz holders 2 further includes a quartz top frame 14 disposed on the uppermost quartz frame 15. A lower portion of the quartz top frame 14 has a plurality of semicircular arc grooves 11 arranged apart, an upper portion has a plurality of semicircular arc grooves 11 or V-shaped grooves arranged apart, and the bottom of the quartz top frame 14 is provided with positioning blocks 13 for matching with the positioning slots 12 of the corresponding quartz frame 15.

In this embodiment, the vacuuming mechanism includes:
a vacuum pump 9, disposed outside the furnace anneal 1;
a vacuuming pipe 8, one end communicating with an internal cavity of the furnace anneal 1, and the other end being connected with a vacuuming port of the vacuum pump 9;
a pipe insulation shell 6, sleeved at an outer wall of the vacuuming pipe 8; and
a cooling fan 7, installed at the pipe insulation shell 6.

The vacuuming operation can be achieved through the vacuuming pipe 8 and the vacuum pump 9; and the vacuuming pipe 8 has been kept in a high temperature state during the operation, and the vacuuming pipe 8 can be protected by disposing the pipe insulation shell 6 to prevent the vacuuming pipe 8 from breaking by external objects, and it can also prevent an operator from being scalded by inadvertently touching.

In this embodiment, the vacuuming mechanism further includes filters 5 detachably installed at both sides of the vacuuming pipe 8.

The furnace anneal 1 generally uses lightweight firebricks and thermal insulation fibers as insulation materials of the interior. During the vacuuming process, a certain amount of asbestos dust will be generated. Using the filter 5 can avoid air extraction which causes air pollution and damage to the vacuum pump 9, and a detachable installation way is convenient for clearance and maintenance.

In this embodiment, a side wall of the furnace anneal 1 is provided with an insulation fibre layer, and a side wall of the pipe insulation shell 6 is provided with the insulation fibre layer.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.

## Claims

1. A dehydroxylation annealing method for a large-sized optical fiber preform comprising the following steps:
i) placing a plurality of optical fiber preforms in a furnace anneal, and leaving an interval between each optical fiber preform;
ii) heating the optical fiber preforms to a stress removal temperature, and a process of heating to the stress removal temperature comprising four stages of raising a temperature uniformly and meeting: speed of raising the temperature in a first stage ≥ speed of raising the temperature in a second stage ≥ speed of raising the temperature in a third stage ≥ speed of raising the temperature in a fourth stage;
iii) preserving the temperature of the optical fiber preforms for a preset time of heat preservation;
iv) reducing the temperature of the optical fiber preforms to a preset cooling temperature, and reducing the temperature to the preset cooling temperature comprising four stages of reducing the temperature uniformly and meeting: speed of reducing the temperature in a fourth stage ≥ speed of reducing the temperature in a third stage ≥ speed of reducing the temperature in a second stage ≥ speed of reducing the temperature in a first stage; and
wherein before the Step ii), a vacuuming operation to the furnace anneal is also comprised, and a vacuum state of the furnace anneal is kept until the end of the Step iv).

2. The dehydroxylation annealing method for the large-sized optical fiber preform according to claim 1, wherein in the Step ii), the speed of raising the temperature in the first stage is 10∼15 °C/min, the speed of raising the temperature in the second stage is 5∼10 °C/min, the speed of raising the temperature in the third stage is 3∼5 °C/min, and the speed of raising the temperature in the fourth stage is 1∼3 °C/min; wherein the first stage is to raise the temperature to 450∼550 °C, the second stage is to raise the temperature to 750∼850 °C, the third stage is to raise the temperature to 950∼1050 °C, and the fourth stage is to raise the temperature to 1070∼1130 °C.

3. The dehydroxylation annealing method for the large-sized optical fiber preform according to claim 1, wherein in the Step iii), the preset time of heat preservation is 450∼500 min.

4. The dehydroxylation annealing method for the large-sized optical fiber preform according to claim 1, wherein in the Step iv), the speed of reducing the temperature in the first stage is 1∼3 °C/min, the speed of reducing the temperature in the second stage is 5∼10 °C/min, the speed of reducing the temperature in the third stage is 10∼15 °C/min, and the speed of reducing the temperature in the fourth stage is 15∼20 °C/min; and the first stage is to reduce the temperature to 1000∼1050 °C, the second stage is to reduce the temperature to 700∼750 °C, the third stage is to reduce the temperature to 400∼450 °C, and the fourth stage is to reduce the temperature to 60∼100 °C.

5. The dehydroxylation annealing method for the large-sized optical fiber preform according to claim 1, wherein in the Step i), both ends of a plurality of optical fiber preforms are placed in the furnace anneal through a quartz holder, and the quartz holder divides the optical fiber preforms in the furnace anneal into a horizontally arranged multilayer superposition structure.

6. The dehydroxylation annealing method for the large-sized optical fiber preform according to claim 1, wherein before the Step ii), the furnace anneal is vacuumed 20 to 40 min in advance.

7. A dehydroxylation annealing device of a large-sized optical fiber preform for achieving the dehydroxylation annealing method for the large-sized optical fiber preform according to any one of claim 1 to claim 6, comprising:
a furnace anneal, a heating element and a thermocouple for detecting a temperature of the optical fiber preforms being installed in the furnace anneal;
two groups of quartz holders, being respectively placed at two ends of a plurality of optical fiber preforms in the furnace anneal, such that the optical fiber preforms are divided into a horizontally arranged multilayer superposition structure, and an interval is left between each optical fiber preform; and
a vacuuming mechanism, for vacuuming the furnace anneal.

8. The dehydroxylation annealing device of the large-sized optical fiber preform according to claim 7, wherein each group of quartz holders comprises:
a quartz base, a top of the quartz base having a plurality of semicircular arc grooves arranged apart;
a plurality of quartz frames, wherein upper and lower sides of the quartz frames are provided with a plurality of semicircular arc grooves arranged apart, and two semicircular arc grooves matching with each other form a cylindrical limit hole matching with an outer wall of the optical fiber preform; and
the quartz base and one of the quartz frames matching with each other in an embedding way, and two adjacent quartz frames matching with each other in the embedding way.

9. The dehydroxylation annealing device of the large-sized optical fiber preform according to claim 7, wherein the vacuuming mechanism comprises:
a vacuum pump, disposed outside the furnace anneal;
a vacuuming pipe, one end communicating with an internal cavity of the furnace anneal, and the other end being connected with a vacuuming port of the vacuum pump;
a pipe insulation shell, sleeved at an outer wall of the vacuuming pipe; and
a cooling fan, installed at the pipe insulation shell.

10. The dehydroxylation annealing device of the large-sized optical fiber preform according to claim 9, wherein the vacuuming further comprises filters detachably installed at both sides of the vacuuming pipe.
